Europäisches Patentamt

European Patent Office

Office européen des brevets

(19)

(11) **EP 1 301 042 A2**

(12) **EUROPEAN PATENT APPLICATION**

(43) Date of publication:
**09.04.2003 Bulletin 2003/15**

(51) Int Cl.⁷: **H04N 7/26**

(21) Application number: **02003665.3**

(22) Date of filing: **18.02.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **05.10.2001 JP 2001309385**

(71) Applicant: **Hitachi, Ltd.**
**Chiyoda-ku, Tokyo 101-8010 (JP)**

(72) Inventor: **Suzuki, Yoshinori, c/o Hitachi, Ltd., Int.Prop.Gr.**
**Chiyoda-ku, Tokyo 100-8220 (JP)**

(74) Representative: **Strehl Schübel-Hopf & Partner**
**Maximilianstrasse 54**
**80538 München (DE)**

(54) **Method for coding data of special effect**

(57)  A method for coding data of special effect is disclosed. In the conventional method of coding only the mask data for special effect, a data library cannot be made of the special effect procedure accompanied by motion. In view of this, the data representing a mask pattern and a motion pattern are coded and composited into single data to make a library of the special effect patterns accompanied by image warping. Also, the compressed data for realizing the special effect can also be distributed. Further, by enlarging the shape data using the motion vector for enlargement, the data amount of the mask data for special effect can be reduced.

# FIG.1

**Description**

BACKGROUND OF THE INVENTION

The present invention relates to the processing of an image sequence, or in particular to the coding of a special effect pattern and the composition process of a special effect scene.

In the prior art, the connection between images, for example, has been smoothly switched by subjecting a video signal to a special effect. The special effect is known to include the techniques such as "wipe", "dissolve" and "fade-in fade-out".

JP-A-7-143399 discloses a technique for reducing the data for special effect by coding the mask data used to carry out the special effect on a special effect processing unit.

JP-A-2000-341584, on the other hand, discloses an image recording apparatus for reflecting a special effect in the display on the reconstruction side by recording the effect of scene switching as a script.

SUMMARY OF THE INVENTION

In the conventional method of coding only the mask data for special effect or the conventional method of warping the image at the reconstructed image level, the warping information is required to be inserted each time in the intended scene description data. As a result, the problem has been posed that it is difficult to make a library of the patterns for special effect.

Accordingly, it is an object of the present invention to provide a method for coding data representing the mask pattern and the motion pattern of warping any reconstructed image for special effect, and compositing the coded data into unified data, thereby making it possible to produce a library of the special effect patterns accompanied by warping of an image.

These and other objects, features and advantages of the present invention will become more apparent in view of the following detailed description of the preferred embodiments in conjunction with accompanying drawings.

BRIEF DESCRIPTION OF THE DRAWINGS

Fig. 1 shows an example of a configuration for performing the process for generating special effect data.
Fig. 2 shows an example of the global motion compensation process.
Fig. 3 shows an example of a configuration for the process for generating system data.
Fig. 4 shows an example of a format of special effect data.
Fig. 5 shows an example of a format of a frame header for the special effect data.
Fig. 6 shows an example of a format of motion pattern data in the special effect data.
Fig. 7 shows an example of a format of video data containing the motion pattern data.
Fig. 8 shows an example of a frame image with a rectangular patch attached thereon.
Fig. 9 shows an example of a frame image with a triangular patch attached thereon.
Fig. 10 shows an example of macroblock (MB) division.
Fig. 11 is a diagram showing a macroblock structure.
Fig. 12 shows an example of a MB data format in the special effect data.
Fig. 13 shows an example of the special effect motion vector and the motion compensation based on the slide-in assumption.
Fig. 14 shows an example of the special effect motion vector and the motion compensation based on the assumption of shape data size enlargement.
Fig. 15 shows an example of a configuration for performing the process of decoding the system data and compositing a scene containing the special effect.
Fig. 16 shows an example of a format of the MB data in the unified data including the special effect data and the video data.
Fig. 17 shows an example of a configuration for the process of generating the unified system data including the special effect data and the video data.
Fig. 18 shows an example of the special effect processing based on the slide-in assumption.
Fig. 19 shows an example of the special effect processing based on the assumption of shape data size enlargement.

DESCRIPTION OF THE EMBODIMENTS

First, the motion patterns handled in this invention will be explained. In the special effect such as "dissolve" in which two scenes are gradually replaced with each other, the two scenes themselves remain unchanged and therefore an effect pattern can be expressed with the mask data alone. It is therefore possible to make a library of the special effect patterns simply by coding the mask pattern. For making a library of such an effect as "slide in" in which the scene to be replaced is accompanied by a motion or an effect in which the mask pattern itself is accompanied by a motion, however, the motion pattern of the scene is required to be coded in addition to the mask pattern.

The motion pattern is defined by the type of the motion model and the applicable range thereof. The type of the motion model includes, for example, an affine transform model expressed as

$$u_g(x,y) = a_0 x + a_1 y + a_2$$

$$v_g(x,y) = a_3 x + a_4 y + a_5 \tag{1}$$

and a bilinear transform model expressed as

$$u_g(x,y) = b_0 xy + b_1 x + b_2 y + b_3$$

$$v_g(x,y) = b_4 xy + b_5 x + b_6 y + b_7 \tag{2}$$

In these two equations, $(u_g(x, y), v_g(x, y))$ indicates the motion vector of the pixel $(x, y)$ in the image and $a_0$ to $a_5$, $b_0$ to $b_7$ indicate the motion parameters. The applicable range, on the other hand, is determined by which is selected, a method of warping the whole image by a single motion parameter or a method of warping each part of the image by a different motion parameter. In any case, a library of motion patterns can be made by coding the motion parameters shown in Equation (1) or (2) separately for each applicable range. The motion parameters can be coded directly by coding the values of $a_0$ to $a_5$ or $b_0$ to $b_7$. In another method, however, the motion vectors at several reference points are coded. Assume that the motion model is the affine transform expressed by Equation (1), the applicable range is the whole image, and the coordinates of the pixels at the upper left corner, the upper right corner, the lower left corner and the lower right corner of the image are expressed as $(0, 0)$, $(r, 0)$, $(0, s)$, $(r, s)$, respectively (where r and s are integers). Also assume that the horizontal and vertical components of the motion vectors at the reference points $(0, 0)$, $(r, 0)$, $(0, s)$ are given as $(u_a, v_a)$, $(u_b, v_b)$, $(u_c, v_c)$. Then, Equation (1) can be rewritten as

$$u_g = \frac{u_b - u_a}{r} x + \frac{u_c - u_a}{s} y + u_a$$

$$v_g = \frac{v_b - v_a}{r} x + \frac{v_c - v_a}{s} y + v_a \qquad \cdots \quad (3)$$

This is indicative of the fact that a similar function can be realized by transmitting $u_a$, $v_a$, $u_b$, $v_b$, $u_c$, $v_c$ instead of $a_0$ to $a_5$. In similar fashion, assuming that the motion model is the bilinear transform model and the applicable range is the whole image, Equation (2) can be rewritten as follows using the horizontal and vertical components $(u_a, v_a)$, $(u_b, v_b)$, $(u_c, v_c)$, $(u_d, v_d)$ of the motion vectors at the four reference points $(0, 0)$, $(r, 0)$, $(0, s)$, $(r, s)$.

$$u_g = \frac{s-y}{s}\left(\frac{r-x}{r}u_a + \frac{x}{r}u_b\right) + \frac{y}{s}\left(\frac{r-x}{r}u_c + \frac{x}{r}u_d\right)$$

$$= \frac{u_a - u_b - u_c + u_d}{rs}xy + \frac{-u_a + u_b}{r}x + \frac{-u_a + u_c}{s}y + u_a \qquad \cdots \quad (4)$$

$$v_g = \frac{v_a - v_b - v_c + v_d}{rs}xy + \frac{-v_a + v_b}{r}x + \frac{-v_a + v_c}{s}y + v_a$$

This indicates that a similar function can be realized by transmitting $u_a$, $v_a$, $u_b$, $v_b$, $u_c$, $v_c$, $u_d$, $v_d$ instead of $b_0$ to $b_7$. Although the foregoing description deals with the affine transform and the bilinear transform, the present invention is not limited to these two transform models, but also applicable to the motion models based on the translational transform, the isotropic transform, the affine transform and the perspective transform used for MPEG-4 handling the global motion compensation with equal effect. In these motion models, too, the motion parameters can be expressed by the motion vectors.

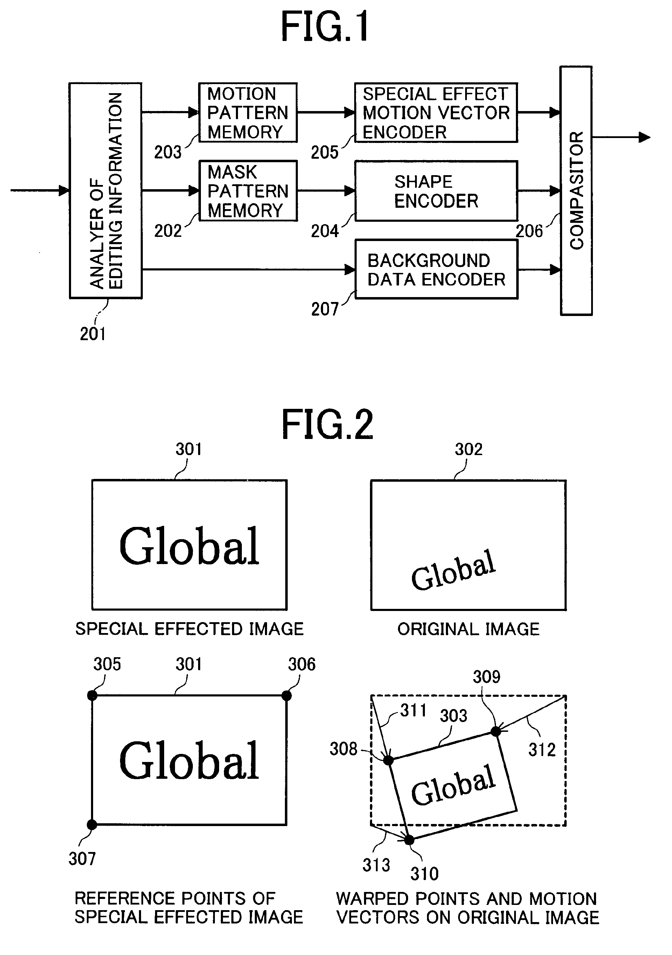

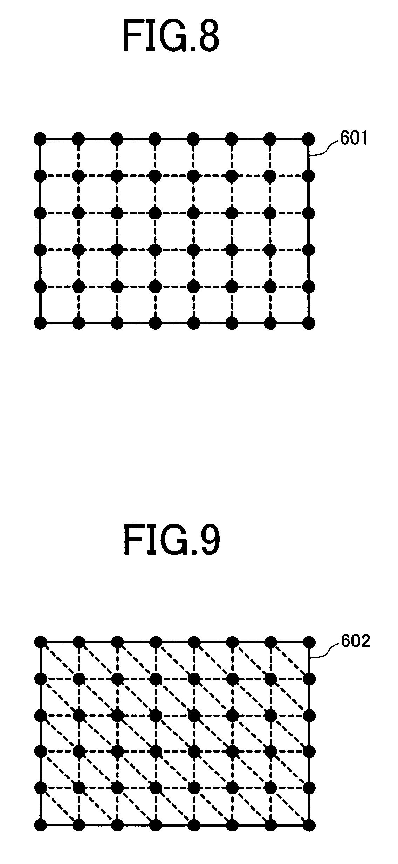

As an example of the image warping process, the procedure for warping an original image 302 shown in Fig. 2 to a special effect image 301 by the affine transform model will be explained. On the coding side, first, the motion parameters are estimated between the original image 302 and the special effect image 301. Then, based on these motion parameters, the motion vectors of the reference points 305, 306, 307 at the upper left corner, the upper right corner and the lower left corner, respectively, of the special effect image 301 are determined. These motion vectors indicate the positions on the original image to which the reference points at the upper left corner, the upper right corner and the lower left corner of the special effect image 301 correspond. In the case under consideration, numeral 303 designates a motion compensated image, and numerals 308, 309, 310 reference points after motion compensation. The motion vectors or the motor parameters are coded. On the decoding side, on the other hand, first, the motion parameters are decoded. In the case where the received data is the motion vectors, the motion parameters are calculated using the relation shown in Equation (3) or (4). Using the motion parameters thus calculated, the motion vector of each pixel on the original image are determined thereby to composite a special effect image. In the case where the motion vector of each pixel thus calculated represents a value in a real number, the pixel value on the special effect image is determined using, for example, the linear interpolation or the like of the neighboring sample values. In the process, the same value can be calculated on the coding and decoding sides by defining an algorithms for quantizing each vector value of a real number with the accuracy of a one-half pixel, one-fourth pixel, etc. for each column and row component. The shown example represents a method of calculating the motion parameters of an ordinary image. In the case of the special effect image, however, the motion parameters is uniquely determined by the type of effect, and coded and stored in a data base (also in the case where a new special effect pattern is generated, a parameter is estimated once and stored in a data base). Generally, therefore, the motion parameters are not required to be estimated at the time of coding. Apart from Fig. 2 showing a case in which the applicable range is the whole image, a case in which the applicable range is divided into several parts of an image can be processed in a similar fashion to a case in which the applicable range is the whole image. By generating a frame 601 (perspective transform model) having square patches as shown in Fig. 8 or a frame 602 (affine transform model) having triangular patches as shown in Fig. 9, for example, the motion vectors or the motion patterns can be coded and the image can be warped patch by patch. This method can be used also for the locally changing motion pattern. The case described above involves the same image size before and after transform. Even in the case where the image size undergoes a change, however, the method described above can be used as it is as long as the spatial positions of the two images before and after the change are defined.

Further, an explanation will be given about a method of generating the special effect data and a method of special effect processing by coding a mask pattern and a motion pattern using the shape encoding and the global motion vector coding which are the functions of the MPEG-4 video coding standard. The MPEG-4 video coding function and the data format are defined in detail in ISO/IEC JTC1/SC29 14496-2:2001(E). According to this embodiment, an explanation will be given about a mechanism for utilizing the functions of the shape coding/decoding and the coding/ decoding of the global motion vectors.

Fig. 1 shows an example of a configuration for the process of generating the special effect data. The mask data and the motion parameters for realizing each special effect are stored in a mask pattern memory 202 and a motion pattern memory 203, respectively. An editing information analyzer 201 analyzes the editing information such as the type of the special effect, the period during which the special effect is generated, the frame rate, the bit rate and the image size, and notifies the mask pattern memory 202 and the motion pattern memory 203 of the information required for constructing each frame of the special effect data. The necessary mask data and the necessary motion parameters determined by analysis are coded in a shape encoder 204 and a special effect motion vector encoder 205, respectively, and composited as an unified special effect data in a compositor 206. The functions of the special effect motion vector encoder 205 and the shape encoder 204 are also contained in an ordinary MPEG-4 video encoder, and therefore generation of a special effect data can be performed by the MPEG-4 video encoder. The shape data handled in the MPEG-4 indicate the ratio of the second scene image superposed on the first scene image. In the technique such as "fade-out" or "fade-in" in which two data are not superposed at the time of scene change, therefore, images to be superposed are required. In such a case, a background data encoder 207 is activated in response to an instruction from the editing information analyzer 201, and the color pattern of the background data (the background data level) to be superposed is coded at the same time. This background data level is also delivered to the compositor 206 and composited as special effect data.

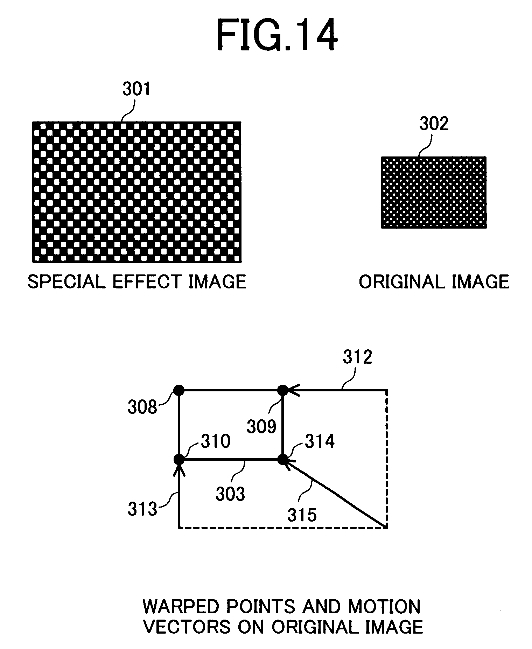

In another method of generating the special effect data, the special effect data for each special effect are prepared in advance and edited in accordance with the editing information. Specific editing methods include, for example, the correction of time stamp information in accordance with the frame rate, the deletion of the frame data and the correction of the image size (of which a specific method is explained with reference to Fig. 14). In this process, the byte alignment or the like process is required due to the change of the data amount.

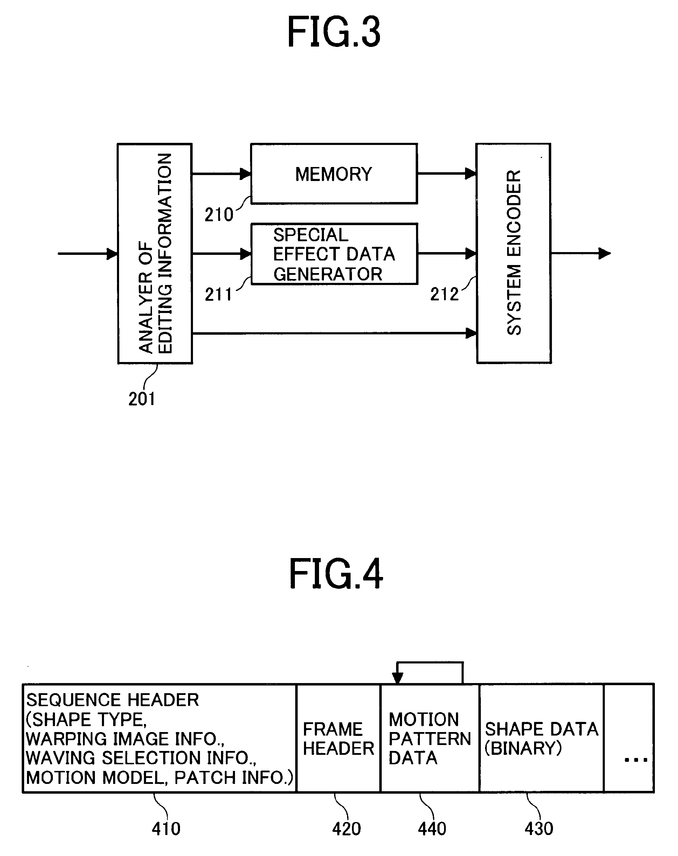

Fig. 3 shows an example of a configuration for performing the process of generating system data. The system data are defined as the composited data including the special effect data generated by the process for generating the special effect data shown in Fig. 1, the data to be edited used for the special effect and the audio data. In the case under consideration, the file format and the packet data for communication into which all the various media data are unified are collectively called the system data. At a terminal that has received the system data, the special effect data are decoded using a system decoder and a decoder for reconstructing the various data unified, and thus a scene containing the special effect is reconstructed. A special effect data generator 211 is configured of the mask pattern memory 202, the motion pattern memory 203, the shape encoder 204, the special effect motion vector encoder 205, the compositor 206 and the background encoder 207 shown in Fig. 1. The coded video data are stored in the memory 210. In accordance with the editing information, the editing information analyzer 201 notifies the memory 210 of the coded video data required. Also, the editing information analyzer 201 notifies the special effect data generator 211 of the information required for generating the special effect data. In accordance with the editing information, the system encoder 212 generates the system data by compositing the coded data (including the audio data) and the special effect data.

Now, an explanation will be given of an example of a format of the special effect data generated in the special effect motion vector encoder, the shape encoder and the compositor.

Fig. 4 shows an example of a format of the special effect data. A sequence header 410 contains parameters for the whole scene such as the shape type of the input data. The MPEG-4 video coding uses four shape types including "rectangular", "binary", "gray scale" and "binary only". In the case under consideration, the shape of the mask pattern is coded using the function of the "binary only" mode in which neither the luminance signal nor the chrominance signal is coded. Nevertheless, the shape type for special effect can be provided as a new mode. Also, according to this invention, the motion pattern is required to be coded in addition to the mask pattern. Now, therefore, the data of the sequence header related to this motion pattern will be discussed. First, according to this invention, an object of warping process is not always the mask data but various different cases may be considered. Assume that the present scene is the scene A and the scene appearing by the special effect is the scene B. In other words, consider a case in which the scene B is superposed on the scene A in accordance with the mask data. In the process, the following objects for the warping process are considered.

1) Mask data
2) Scene B
3) Scene B and mask data
4) Image after masking the scene A and the scene B
5) Scene A

According to this invention, therefore, the information designating the image to which the motion parameters are applied (warping image information), if not negotiated by the coding side and the decoding side, must be prepared. This is also the case with the warping selection information (with also the order of warping in case both the global warping and the local warping of the image are applied to the applicable range) indicating the applicable range (the warping of the whole area of the image and/or the warping of a local area of the image) determining the characteristics of the motion parameters and the information on the type of the motion model used (in the case where the applicable range is the whole screen) and the size and number of patches (including the patch shape and the number of column and row grids, for example, in the case where the applicable range is a local area), all of which are also required to be included in the sequence header in the case where the information is not negotiated by the coding side and the decoding side.

The frame header 420 contains the parameters related to the coding of each frame, the shape data 430 contains the actual coded data of the mask image, and the motion pattern data 440 contains the coded data for the motion parameters.

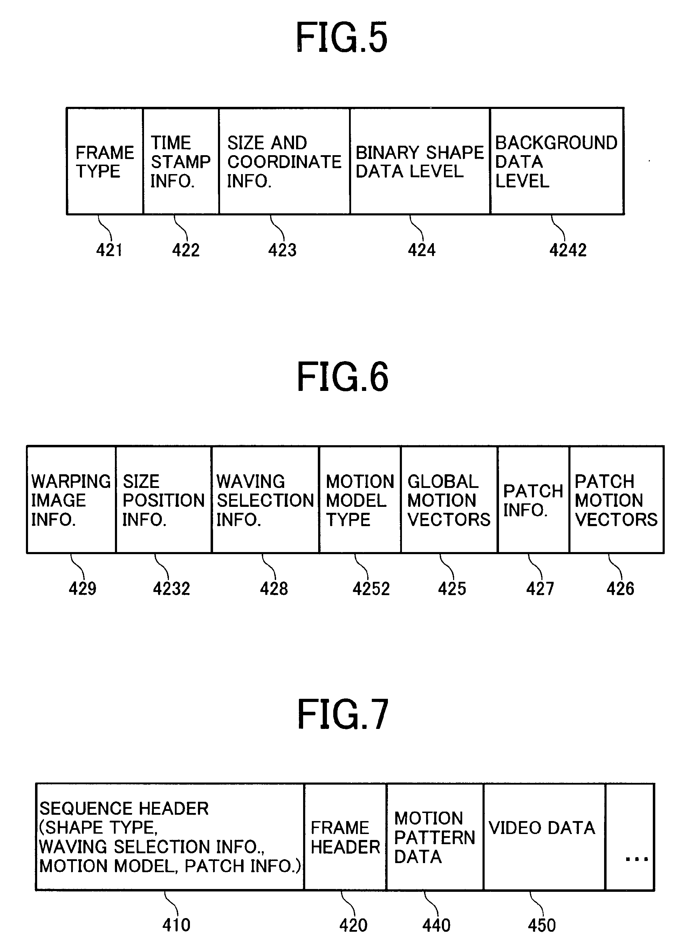

Fig. 5 shows a part of the parameters included in the frame header 420. The frame type 421 is a parameter indicating the coding type of a particular frame such as the intra coding or the predictive coding. The time stamp information 422 is a parameter indicating the time at which the particular frame is to be reconstructed. The size and position information 423 is a parameter indicating the position and size of the reconstructed object and is generated only in the case where the shape type is not "retangular". This parameter indicates the arrangement of the video object to be designated. In the mask data aimed at special effect, the display position is basically at the upper left corner (0, 0) of the screen and the size equal to the screen is employed. Depending on the combination with the motion pattern, however, the data size can be reduced by effectively utilizing this parameter. The shape data level 424 is also a parameter generated only in the case where the shape type is not "rectangular", and acts to change the transparency level of the shape signal of the whole image at the same ratio. Even in the case where the mask data is binary, for example, the use of this parameter makes it possible to change the transparency of the whole mask data. It is therefore possible to express the "dissolve" (two scenes are replaced gradually with each other) only with this shape type information (without coding the shape data). The background data level 4242 functions to add the color pattern of the background data to be superposed (background data level) to the editing data in the case where two scenes are not superposed such as in "fade-out" or "fade-in".

Fig. 6 shows a data format of the motion pattern data 440. In the case where the warping image information, the warping selection information, the motion model and the patch information of the sequence header are used, i.e. in the case where the image is warped according to the same conditions for all the special effect frames, the size and position information 4232 and selected one of the global motion vector 425 and the patch motion vector 426, or both of the global motion vector 425 and the patch motion vector 426 are included in the motion pattern data 440. The data to be included are determined by the warping selection information or according to a predetermined rule (in the case where the warping selection information is not used). The size and position information 4232 indicates the image size and the display position on the screen after the warping process. This information is not required in the case where the image size is not changed by the warping process or the image size after the warping process is predetermined. The global motion vector 425 is a parameter for generating the motion parameters for the whole area of the image. In the MPEG-4 video coding, as indicated in Equations (3) and (4), the motion parameters are generated by the motion vectors at the corners of the image. Also in this embodiment, a mechanism is employed for coding the motion vectors instead of the motion parameters, although the method of coding the motion parameters as they are of course is included in this invention. The patch motion vector 427 is a parameter for generating a motion parameter locally by attaching patches on the frame, as shown in Figs. 8, 9. The case under consideration assumes that the motion vectors at all the grid points in the frame are coded by the motion pattern data 440. In the case where the warping image information, the warping selection information, the motion model and the patch information in the sequence header are moved to this motion parameter data, on the other hand, the type of the motion pattern can be changed frame by frame, thereby making it possible to follow a more detailed motion. In the case where different motion parameters are applied to the scene A, the scene B and the mask data, the motion pattern data 440 is generated repeatedly.

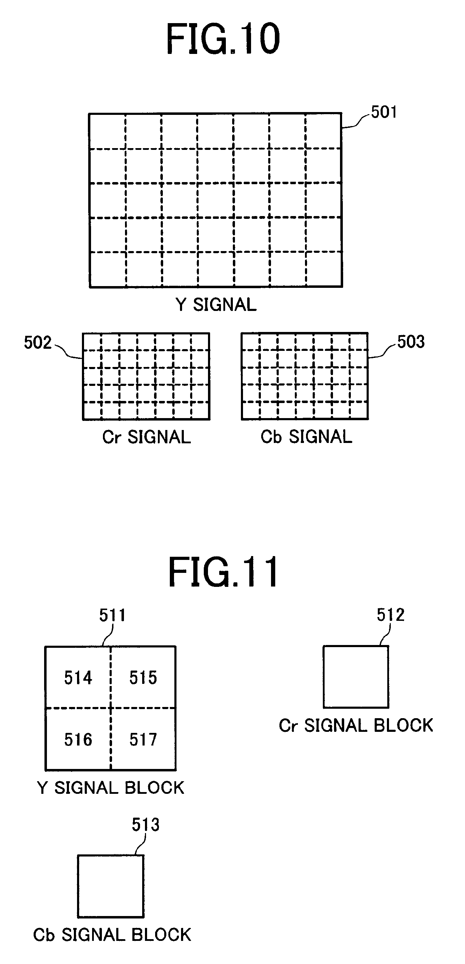

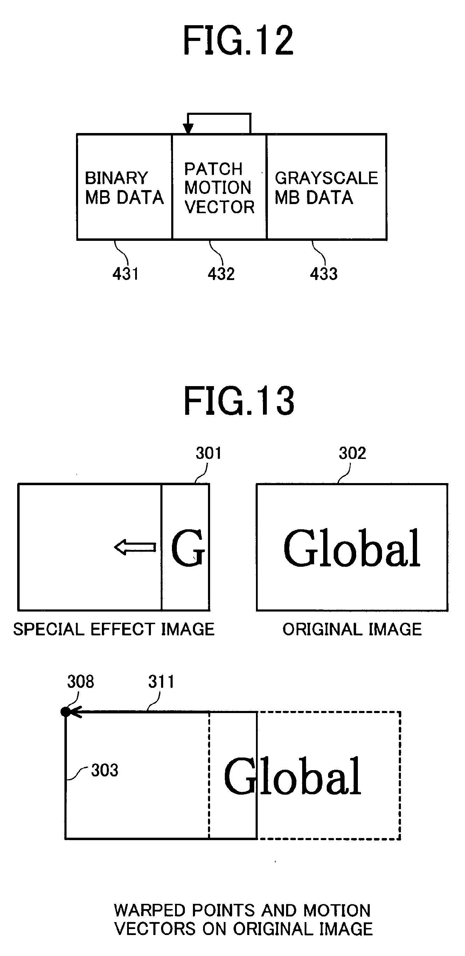

Now, the data format of the shape data 430 shown in Fig. 4 will be explained. According to the MPEG-4 video standard, each frame of the image sequence is divided into small blocks 501, 502, 503 as shown in Fig. 10, and the reconstruction process is carried out in units of block called the macroblock. Fig. 11 shows a structure of a macroblock (MB). The MB is consist of one Y signal block 511 having 16 x 16 pixels, a Cr signal block 512 and a Cb signal block 513 of 8 x 8 pixels spatially coinciding with the Y signal block 511. The Y signal block 511 may be further divided into four 8 x 8 pixel blocks (514, 515, 516, 517) in the process of recostructing the MB. In the mask data expressed in binary, therefore, the binary MB data 431 shown in Fig. 12 is coded sequentially toward MB at the lower right corner from MB at the upper left corner of the image and arranged as the shape data 430. As for the mask data expressed in grayscale, on the other hand, the data format of MB shown in Fig. 12 is configured of the gray scale MB data 433 following the binary MB data. In MPEG-4, however, the shape type only for the gray scale data is not handled, and therefore, the mode called "grayscale only" is required to be provided separately. The gray scale data can be coded by a method in which the gray scale data is handled in a similar way to the coding of the luminance signal as in the shape type of "grayscale" of MPEG-4. As an extension of the MB data format, the size of the MB is rendered to coincide with the size of the patches shown in Figs. 8, 9 so that the patch motion vector 432 of the grid points is arranged in the MB data. In this case, all the information on the number of the patches is not required to be coded by the motion pattern data. Since the number of coded blocks and the number of grid points fail to coincide with each other, however, the motion vectors of the grid points located at the upper and left ends of the frame, for example, are required to be coded in the motion pattern data, and the motion vector of the grid point at the lower right position of the patch is required to be coded with each MB data. Also in this format, a method can be used to provide the motion vector for each of the scene A, the scene B and the mask data by repeating the patch motion vector in the MB data.

In the case of Fig. 4, the warping of the image for special effect other than the mask data is handled within the special effect data. In contrast, as shown in Fig. 7, the motion pattern of the image for special effect can be handled within the video data stream. In this case, only the motion pattern for the mask data is handled in the special effect data, while the information on the motion pattern is added to the video data stream to be subjected to the special effect. Then, the object of image warping is uniquely determined, and therefore the warping image information is not basically required. In the case where the motion parameter is used for motion compensation in the algorithm of the video data, however, the identification information as to whether the image to be warped by the motion pattern is the reconstructed image before display or the previous frame used for motion prediction is required to be added as the warping image information.

Now, an explanation will be given of a method of compositing a special effect scene from the special effect data generated. For facilitating the explanation, assume that only one type of special effect is used for scene composition. In the special effect not accompanied by the warping process, the first scene displaying before generation of the special effect, the second scene appearing after the special effect and the special effect data are decoded for each frame, after which each frame of the second scene is composited with the corresponding frame of the first scene by the masking process of the corresponding mask data. In the special effect accompanied by the warping process, on the other hand, the method of compositing a special effect scene after decoding data is varied depending on the type of the object of the warping process. As described with reference to the sequence header, the following five types of the object of warping process are considered in the case where the special effect used for scene composition is of one type.

1) Mask data
2) Scene B
3) Scene B and mask data
4) Image after masking scene A and scene B
5) Scene A

Now, a method of compositing a given one frame will be explained for each of these cases.

In the case (1) above, first, the mask data is warped in accordance with the motion parameter. The frame of the second scene is composited with the frame of the first scene by the masking process of the warped mask data.

In the case (2) above, first, the frame of the second scene is warped in accordance with the motion parameter. The frame of the second scene thus warped is composited with the frame of the first scene by the masking process of the mask data.

In the case (3) above, first, the frame of the second scene and the mask data are warped in accordance with the motion parameter. The frame of the second scene thus warped is composited with the frame of the first scene by the masking process of the warped mask data.

In the case (4) above, first, the frame of the second scene is composited with the frame of the first scene by the masking process of the mask data. The data thus composited is warped in accordance with the motion parameter.

In the case (5) above, first, the frame of the first scene is warped in accordance with the motion parameter. The frame of the second scene is composited with the frame of the warped first scene by the masking process of the mask data.

The motion parameter referred herein is defined as selected one of the global motion vector and the patch motion vector or a combination thereof. Basically, the same method is employed also in the case where a single frame is composited using two or more types of motion parameters. Specifically, while compositing the frame of the first scene and the frame of the second scene by the mask data, the warping process is carried out on each image of warping.

The image warping process for the cases (1) and (2) described above will be explained by referring to a case in which the applicable range of the motion parameter is the whole area of the image.

Fig. 13 is a diagram showing the motion vector for special effect and the motion compensation assuming the slide-in mode for the case (2). The configuration of Fig. 13 is the same as that of Fig. 3. In Fig. 13, however, the portions indicating the reference points 305, 306, 307 of the special effect image 301 are not shown. Also, the motion model is assumed to be a translational transform, and the reference point is provided only at the upper left corner of the screen. In this case, the effect of replacing the first scene is assumed as the second scene slides in from the right end of the screen. Thus, the original image 302 before warping makes up an image always displayed in the whole screen, and the special effect image 301 an image obtained by translational transform of the original image 302. By reducing the magnitude of the vector for this translational transform gradually, the special effect of the slide-in can be realized. In the process, it is assumed that the mask data is displayed at the left end (0, 0) of the screen and remains in the same size as the screen, the pixel value of the portion where the frame of the first scene is displayed is "0" (the first scene is displayed), and that the pixel value of the portion where the frame of the second scene is displayed is "1" (the second scene is displayed). As in Fig. 3, numeral 303 designates the motion compensation image for representing the position, which corresponds to that of the reference point located at the upper left corner of the special effect image 301, on the original image numeral 308 designates the reference point after motion compensation, and numeral 311 designates the global motion vector. In accordance with this global motion vector 311, the pixel value in the frame after the special effect is calculated. In the case under consideration, however, a pixel exists of which the motion vector indicates the outside of the original image. In such a case, generally, the motion vector for each pixel is clipped to less than the screen size for each of the column and row components, and the data at the edge of the image is used as a compensated pixel. In the case (2), however, the pixel indicating the outside of the original image corresponds to "0" value of the mask data, and therefore is not actually required to be compensated. This slide-in effect is a simple translational transform not associated with a complicated warping, and therefore a method can be used for designating only the image size and the display position without using the motion parameter.

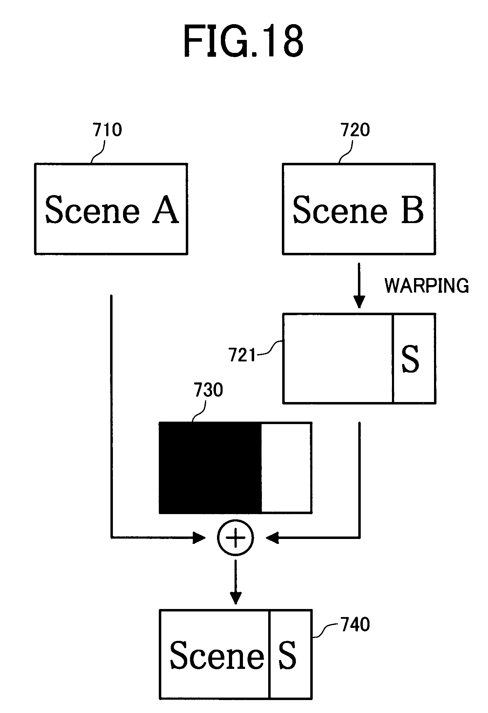

Fig. 18 shows an example of the special effect process assuming the slide-in. Numeral 710 designates a first scene frame displaying before generation of the special effect, numeral 720 a second scene frame appearing after the special effect, and numeral 730 mask data. The second scene frame 720 is warped as shown by 721 by the motion parameter of the translational transform. The first scene frame and the second scene frame 721 thus warped are composited with each other thereby to generate a composite frame 740 subjected to the special effect process.

Fig. 14 is a diagram showing an example of the motion vector and the motion compensation for the special effect based on the assumed the enlargement processing of the mask data size. The configuration of Fig. 14 is the same as that of Fig. 3. In Fig. 14, however, the reference points 305, 306, 307 of the special effect image 301 are not shown. Also, with the motion model as a perspective transform, a reference point is arranged also at the lower right corner of the screen. In this case, the amount of coded data is assumed to be reduced by coding the small-sized mask data and the motion parameter for enlarging the size thereof instead of coding the mask data of the screen size. Therefore, the special effect image 301 which is reduced in screen size from the original image 302 before warping is zoomed up to the screen size. As in Fig. 3, numeral 303 designates a motion compensated image for representing the positions, which correspond to those of the reference points located at the upper left corner, the upper right corner, the lower left corner and the lower right corner of the special effect image 301, on the original image. Numerals 308, 309, 310, 314 designate the reference points after motion compensation, and numerals 312, 313, 315 the global motion vectors. The motion vector of each pixel is calculated using the motion parameter of the perspective transform calculated from these global motion vectors thereby to calculate the pixel value in the mask data after the special effect.

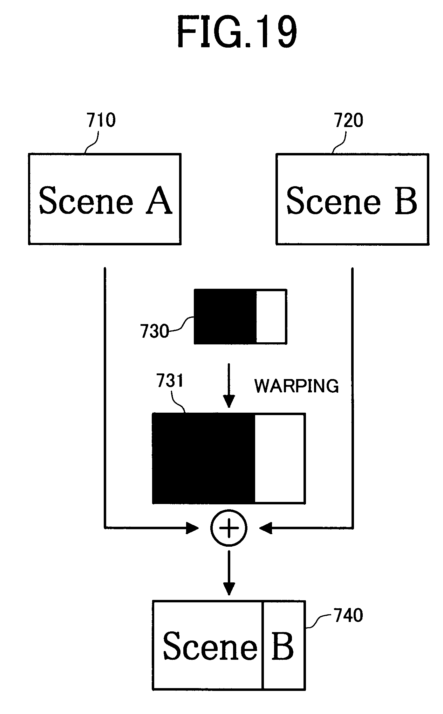

Fig. 19 shows an example of the special effect process assuming that the size of the shape data is enlarged. As in Fig. 18, numeral 710 designates a first scene frame displaying before generation of a special effect, numeral 720 a second scene frame appearing after the special effect, and numeral 730 mask data. The mask data 730 is warped as shown by 731 by the motion parameter for enlargement. Based on the mask data 731 thus warped, the second scene frame and the first scene frame are composited with each other. In this way, a composited frame 740 subjected to the special effect process is generated.

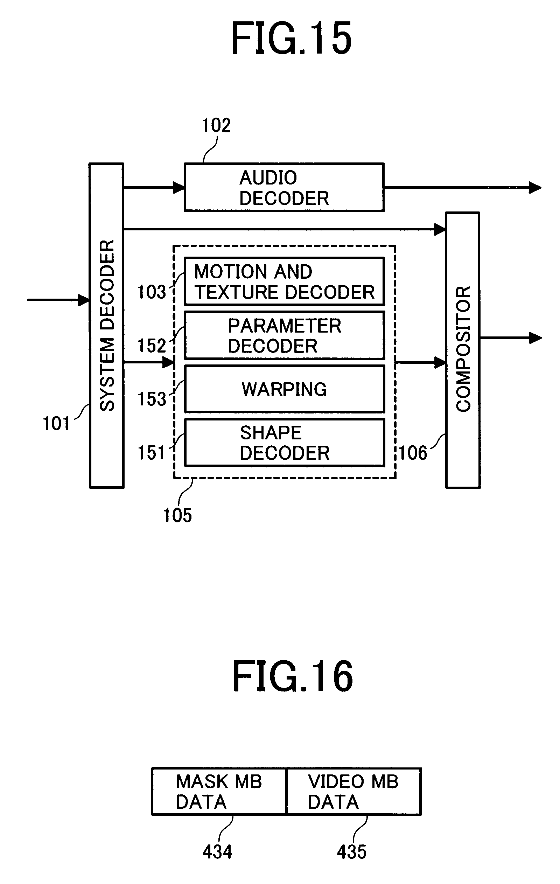

Now, a method of compositing an image with the special effect from the data generated by the system data generation process shown in Fig. 3 will be explained with reference to the example shown in Fig. 15. First, the input system data are separated into audio data, video data (the first scene displaying before generation of the special effect and the second scene appearing after the special effect) and special effect data. The audio data thus separated are decoded in an audio decoder 102, and reproduced from a speaker in accordance with the time stamp information contained in the system data or the audio data. The special effect data separated, on the other hand, is input to a video decoder 105. In the special effect video decoder 105, the type information (the patch information and the motion model information) and the warping type information (warping selection information and the warping image information) shown in Figs. 5, 6, 7 are decoded. As a second step, the global motion vector or the patch motion vector picked out from the special effect data is decoded by the parameter decoder 152 based on the motion type information thereby to calculate the motion parameter. As a third step, the shape data picked out from the special effect data is decoded by the shape decoder 151 thereby to produce the mask data. The video data separated is decoded into the frames of the first scene and the second scene, respectively, by a motion and pattern decoder 103 (the shape decoder in the case where the video data has a shape component, or the parameter decoder with the image warping unit in the case where the video data is accompanied by the global motion vector compensation). Among the frame images of the first scene and the second scene and the mask data decoded by the video decoder, the image designated by the warping selection information or the image prescribed by the algorithm is input to the image warping unit 153 and warped in accordance with the motion parameter decoded. After that, the frame images of the first scene and the second scene and the mask data are input to the compositor 106 and composited as a special effect image. In Fig. 15, by way of explanation, the parameter decoder and the image warping unit are described as processing units different from the motion and pattern decoder. Generally, however, the parameter decoder and the image warping unit are included in the motion and pattern decoder.

Fig. 15 shows a method of reconstructing a special effect scene from the system data received. As the work of compositing the special effect image, however, a simple method may alternatively be considered in which the special effect data and the video data to be edited are selected from the stored data and the special effect data are corrected while compositing a scene.

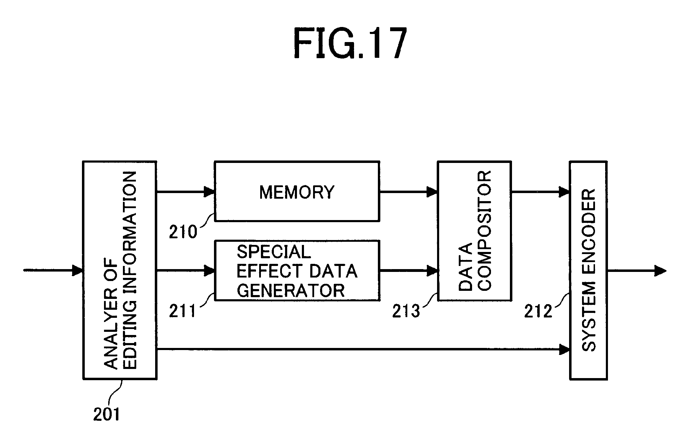

In the foregoing description of the special effect processing, the special effect data and the video data are handled as separate bit streams. Nevertheless, the special effect data and the video data of the second scene appearing after the special effect can be handled as unified data. Specifically, the shape type for the unified data is prepared separately, and the formats of the sequence header and the frame header are defined for handling the two types of data as unified data. Further, the unified MB data for the two data are defined as shown in Fig. 16. The unified MB data are consist of the mask MB data 434 and the video MB data 435 which are independent of each other. Fig. 17 is a diagram showing the system data generation process extended for the unified data. Fig. 17 is different from Fig. 3 in that the data compositor 213 is added in Fig. 17. The data compositor 213 has the function of unifying the special effect data generated by the special effect data generator 211 with the video data to be edited output from the memory 210. In the absence of the special effect data, the data compositor 213 outputs the input data (the data of the first video scene, the audio data, etc.) as they are. The unified data can be reconstructed by the decoder components shown in Fig. 15.

The present invention includes the following modifications. Although the embodiments of this invention were described above with reference to a case in which the MPEG-4 function is used as an example, the application of the invention is not limited to MPEG-4, but includes any processing apparatus or method having the function of handling the mask data and the motion vectors (motion parameters). Also, the method of coding the mask pattern and the motion pattern is not limited to the MPEG-4 algorithm.

Although the embodiments of the invention were described above include the formats of the special effect data as shown in Figs. 5 to 7, 12, 16, the arrangement of each element in the format is not limited to the shown case, but includes all the data and the methods for the data generating process which handle the data containing the elements described in the drawings such as the shape data and the motor vector.

Further, according to this invention, the shape type of the video data to be subjected to the special effect is not limited to the described ones, but applicable also to an arbitrary object with equal effect. For example, the invention is applicable to the special effect carried out for an object appearing in a scene. In such a case, the special effect is used for each shape data of the particular object.

Also, the embodiments of the invention were described above only with reference to a single object as a scene to be subjected to the special effect. Nevertheless, the invention is equally applicable to a scene configured of a plurality of objects as well. In such a case, the object scenes are composited and the special effect is carried out for the composited image.

According to this invention, a library can be made of the special effect patterns accompanied by warping of an image. Also, the compressed data for realizing the special effect can be distributed. Furthermore, the data amount of the mask data for the special effect can be reduced by enlarging the size of the shape data using the motion vector for enlargement.

While the present invention has been described above in conjunction with the preferred embodiments, one of ordinary skill in the art would be enabled by this disclosure to make various modifications to this embodiment and still be within the scope and spirit of the invention as defined in the appended claims.

**Claims**

1. A method of coding special effect data comprising the steps of coding a mask pattern for the special effect and a motion pattern of warping any reconstructed image, and compositing said coded data into unified data.

2. A method of coding special effect data according to Claim 1, wherein said unified composite data further include the coded information (warping image information) indicating the type of the image to be warped based on the motion pattern.

3. A method of coding special effect data according to Claim 1, wherein the applicable range of said motion pattern is a whole area of the image.

4. A method of coding special effect data according to Claim 1, wherein the applicable range of said motion pattern is a local area of the image, and said motion pattern is consist of a plurality of motion parameters.

5. A method of coding special effect data according to Claim 1, wherein said motion pattern includes information indicating the image size and display position after warping.

6. A method of coding special effect data according to Claim 1, wherein a plurality of said motion patterns are included in each frame data.

7. A method of coding special effect data according to Claim 1, wherein said mask pattern is consist of binary data and the level of transparency.

8. A method of coding special effect data according to Claim 1, wherein said mask pattern is the gray scale data.

9. A method of displaying the special effect image comprising the steps of decoding the coded data including a mask pattern and a motion pattern, and performing the arithmetic operation the input image or the decoded image to be subjected to the special effect processing, based on the decoded mask data and the decoded motion parameter.

10. A method of displaying the special effect according to Claim 9, wherein said coded data further include the warping image information indicating the type of the image to be warped, and said arithmetic operation is performed based on said warping image information.

11. A method of special effect processing according to Claim 9, wherein said arithmetic operation performed for the input image or the decoded image to be subjected to the special effect processing includes the process for warping the mask data based on the motion parameter.

12. A method of special effect processing according to Claim 9, wherein said arithmetic operation performed for the input image or the decoded image to be subjected to the special effect processing includes the process for warping a input image or a decoded image based on the motion parameter.

13. A method of special effect processing according to Claim 9, wherein said arithmetic operation performed for the input image or the decoded image to be subjected to the special effect processing includes the process for warping an image composited from two input images or two decoded images to be subjected to the special effect processing, based on the motion parameter.

14. A method of editing the special effect data, wherein the coded data of the motion pattern for warping an image are added to the coded video data in store.

15. A method of editing the special effect data according to Claim 14, further comprising the step of compositing the coded data of the information indicating whether the image warped based on the motion pattern is a reconstructed image before display or a reference image for motion compensation.

# FIG.1

# FIG.2

301

302

Global

Global

SPECIAL EFFECTED IMAGE

ORIGINAL IMAGE

305    301    306

Global

307

REFERENCE POINTS OF
SPECIAL EFFECTED IMAGE

309

311   303

308

312

Global

313   310

WARPED POINTS AND MOTION
VECTORS ON ORIGINAL IMAGE

# FIG.3

ANALYER OF EDITING INFORMATION 201

MEMORY 210

SPECIAL EFFECT DATA GENERATOR 211

SYSTEM ENCODER 212

# FIG.4

| SEQUENCE HEADER (SHAPE TYPE, WARPING IMAGE INFO., WAVING SELECTION INFO., MOTION MODEL, PATCH INFO.) | FRAME HEADER | MOTION PATTERN DATA | SHAPE DATA (BINARY) | ... |
|---|---|---|---|---|
| 410 | 420 | 440 | 430 | |

# FIG.5

| FRAME TYPE | TIME STAMP INFO. | SIZE AND COORDINATE INFO. | BINARY SHAPE DATA LEVEL | BACKGROUND DATA LEVEL |
|---|---|---|---|---|
| 421 | 422 | 423 | 424 | 4242 |

# FIG.6

| WARPING IMAGE INFO. | SIZE POSITION INFO. | WAVING SELECTION INFO. | MOTION MODEL TYPE | GLOBAL MOTION VECTORS | PATCH INFO. | PATCH MOTION VECTORS |
|---|---|---|---|---|---|---|
| 429 | 4232 | 428 | 4252 | 425 | 427 | 426 |

# FIG.7

| SEQUENCE HEADER (SHAPE TYPE, WAVING SELECTION INFO., MOTION MODEL, PATCH INFO.) | FRAME HEADER | MOTION PATTERN DATA | VIDEO DATA | ... |
|---|---|---|---|---|
| 410 | 420 | 440 | 450 | |

# FIG.8

601

# FIG.9

602

# FIG.10

Y SIGNAL

Cr SIGNAL　　　Cb SIGNAL

# FIG.11

| 514 | 515 |
| 516 | 517 |

Y SIGNAL BLOCK

Cr SIGNAL BLOCK

Cb SIGNAL BLOCK

# FIG.12

| BINARY MB DATA | PATCH MOTION VECTOR | GRAYSCALE MB DATA |
|---|---|---|
| 431 | 432 | 433 |

# FIG.13

301

302

SPECIAL EFFECT IMAGE

ORIGINAL IMAGE

308    311

303

WARPED POINTS AND MOTION
VECTORS ON ORIGINAL IMAGE

# FIG.14

301

**SPECIAL EFFECT IMAGE**

302

**ORIGINAL IMAGE**

312

308

309

310    314

303

313

315

**WARPED POINTS AND MOTION
VECTORS ON ORIGINAL IMAGE**

# FIG.15

# FIG.16

| MASK MB DATA | VIDEO MB DATA |
|---|---|

434        435

# FIG.17

# FIG.18

710

Scene A

720

Scene B

WARPING

721

S

730

740

Scene S

# FIG.19

710

720

Scene A

Scene B

730

731

WARPING

+

Scene B

740